Europäisches Patentamt

European Patent Office

Office européen des brevets

(19)

(11) Veröffentlichungsnummer: **0 184 543**
**B1**

(12) **EUROPÄISCHE PATENTSCHRIFT**

(45) Veröffentlichungstag der Patentschrift: **30.01.91**

(21) Anmeldenummer: **85730144.4**

(22) Anmeldetag: **17.10.85**

(51) Int. Cl.⁵: **C 08 K 3/02,** C 08 L 95/00,
E 01 C 7/18

(54) **Zuschlagstoff für den Strassenbau.**

(30) Priorität: **06.12.84 DE 3444783**

(43) Veröffentlichungstag der Anmeldung:
**11.06.86 Patentblatt 86/24**

(45) Bekanntmachung des Hinweises auf die
Patenterteilung:
**30.01.91 Patentblatt 91/05**

(84) Benannte Vertragsstaaten:
**AT BE CH FR GB LI LU NL**

(56) Entgegenhaltungen:
**GB-A- 26 173**
**GB-A- 462 742**

(73) Patentinhaber: **MANNESMANN**
**Aktiengesellschaft**
**Mannesmannufer 2**
**D-4000 Düsseldorf 1 (DE)**

(72) Erfinder: **Siegmund, Werner**
**Oberdorfstrasse 17**
**D-6901 Heiligkreuzsteinach (DE)**
Erfinder: **Schmitt, Oskar M., Prof.**
**Zur Fernsicht 21**
**D-5190 Stolberg-Zweifall (DE)**

(74) Vertreter: **Meissner, Peter E., Dipl.-Ing. et al**
**Patentanwaltsbüro Meissner & Meissner,**
**Herbertstrasse 22**
**D-1000 Berlin 33 (DE)**

Courier Press, Leamington Spa, England.

EP 0 184 543 B1

**Beschreibung**

Die Erfindung betrifft einen reaktionsaktiver Füller für den Bau bitumengebundener Straßendecken und obergleichen.

Es ist bekannt, daß bei der Erstellung bitumengebundener Straßendecken die Eigenschaften der Decke über feinkörnige Zuschlagstoffe gezielt beeinflußt werden können. So kann die Viskosität des Bitumen durch Füllstoffe und andere Zusätze erhöht werden. Eine wichtige Rolle bei konventionellen Straßendecken spielt dabei das Füller/ Bitumenverhältnis. Kautschuk- und Kunststoff-Zusätze, die die Viksosität nicht generell erhöhen, sondern nur im Bereich höherer Temperaturen, sind ebenfalls bekannt. Es ist auch bekannt (DE—OS 29 43 447) über salzhaltige Füller eine Gefrierpunktabsenkung für Oberflächenwasser zu erreichen und so einen frosthemmenden Straßenbelag zu erzeugen. Andere Zusätze zur Beeinflussung der Eigenschaften einer Asphaltdecke benutzen Metallverbindungen, die bitumen-löslich sind, wofür die DE—PS 29 47 142 sowohl Mangan-, Kobalt- und Kupferverbindungen, Blei- oder Eisendoppelsalze, Schwermetallsalze und organische Säuren von Aluminium, Chrom, Kupfer und Quecksilber offenbart.

Alle Vorschläge, die Eigenschaften des Bitumens durch bitumenlösliche Zusätze zu verändern, bringen abwicklungstechnische Probleme mit sich. Das erste Problem ist technischer Art und betrifft das Mischen des Zusatzes mit dem Bitumen, das zweite Problem erwächst aus der Löslichkeit der Zusätze, weil noch nicht geklärt ist, ob diese Zusätze langfristig in Lösung bleiben oder ob sie allmählich ausdunsten, eventuell sogar chemisch gespalten werden und negative Umwelteinflüsse ausüben.

Demgegenüber ist dem Straßenbauer der feste Füller ein vertrautes Mittel zur Beeinflussung der Eigenschaften einer Straßendecke, sowie das Verbrauchs an bituminösem Bindemittel, wobei auf bewährte Verarbeitungsvorgänge auch bei der Herstellung von Sonderbelägen zurückgegriffen werden kann.

Aus der GB—A—462 742 ist die Verbesserung der Oberflächengriffigkeit und des Zusammenhaltes einer als Straßenbelag verwendeten Bitumenmischung bekannt, wobei der Mischung teilchenförmige Zusatzstoffe aus Metall, Holz usw. zugesetzt werden.

Dabei kann die Form (Späne, Haken, Spiralen, Drähte) ebenso wie die Größe beliebig sein. Es ist aber hieraus auch bekannt Pulver zu verwenden, ohne daß Größenangaben offenbart sind. Die Wirkung dieser Teilchen entspricht etwa einer Armierung, ist also rein mechanisch.

Aufgabe der Erfindung ist es, die Möglichkeiten zur Beeinflussung der Eigenschaften einer bitumengebundene Straßendecke oder dergleichen zu erweitern, ohne die üblicherweise im Straßenbau verwendeten Bitumen oder Asphalte durch bitumenlösliche Zusätze verändern zu müssen.

Die Lösung dieser Aufgabe besteht in der Verwendung eines reaktionsaktiven Füllers, der eine Körnung unter 0,1 mm hat und sich aus einer metallischen Komponente, nämlich Eisenpulver, und einer nichtmetallischen Komponente zusammensetzt. Als nichtmetallische Komponente sind einzeln, in beliebigen Kombinationen oder gemeinsam Steinmehl, Kunststoff, Kohlenstoff, d.h. übliche wie auch neue Füller vorgesehen. In diesen reaktionsaktiven Füller sollte gemäß Anspruch 2 das Eisenpulver in der Kornklasse 0—0,04 mm, die nichtmetallische Komponente bei 0—0,09 mm liegen. So kann die Oberflächenaktivität des Eisenpulvers erhöht und eine relativ hohe Anzahl von Eisenpulverteilchen vorgegeben werden. Auf die Patentansprüche 3 und 4 wird verwiesen.

Auch ein konventioneller Füller ist reaktionsaktiv, weil er, wie dargestellt, die Bitumenviskosität beeinflußt. In viel stärkerem Maße reaktionsaktiv sind die bekannte Füller, die Salz, nämlich NaCL, enthalten. Sie sorgen für einen gewissen Ionenfluß, der ganz entscheidend die Oberflächeneigenschaften beispielsweise das Ablöseverhalten von Schnee beim Schneeräumen beeinflußt. Diese Eigenschaften werden durch das Eisenpulver noch verstärkt. Eine Eisenpulver enthaltende Schwarzdecke hat neben seinen üblichen Eigenschaften die Eigenschaft, der Eisenpulverdosierung entsprechend mehr oder weniger magnetisch zu sein.

Von besonderer Bedeutung ist die Katalysatorwirkung des Eisens, des elementaren Eisens auf das Bitumen, welche letztlich zu einer Verminderung des Bitumenanteils, also des Bindemittelverbrauches bei gleichzeitiger Reduzierung des Porenvolumens in der Straßendecke führt. Hohe Festigkeitswerte und lange Standzeiten sind die Folge.

Ein Freiwerden von Eisenpulver durch den Abrieb der Straßendecke hat keine nachteiligen Folgen. Eisenpulver ist weder gesundheits- noch umweltschädlich.

In der Praxis lassen sich vielfältige Varianten ausführen. In der Regel wird man für eine Straßendecke einen reaktionsaktiven Füller mit etwa 10 bis 30 Gew.% Eisenpulver und zusätzlich noch einmal etwa dieselbe Menge an konventionellem Füller, z.B. Lavamehl, verwenden.

Eine Sonderbelagsmischung könnte demnach wie folgt zusammengesetzt sein:

| Splitt | 8—11 mm | 22 Gew.% |
|---|---|---|
| Splitt | 5—8 mm | 18 Gew.% |
| Splitt | 2—5 mm | 19 Gew.% |
| Sand | —2 mm | 26 Gew.% |
| Konventionellor Füller: | | |
| Lavamehl | —0,09 mm | 7 Gew.% |
| Eisenpulver h. reaktionsakt. | | |
| Füller | —0,09 mm | 8 Gew.% |
| | | 100 Gew.% |

(Eisenpulvergehalt bezogen auf 100 Gew.% Mineralmischung: (0,8—2,4 Gew.%).

Diese Mischung wird in einer Mischtrommel gut durchmischt, angewärmt und mit etwa 4,8 bis 5,4% Bitumen versetzt. Ohne Eisenpulver wären etwa 6% Bitumen nötig.

Es ist, wenn Kunststoff in die Straßendecke eingebracht werden soll, verarbeitungstechnisch vorteilhafter gemäß Anspruch 4, gemahlenen Polyurethanschaum zu 2 bis 10% als nichtmetallische Komponente vorzusehen. Polyurethanschaum läßt sich bei Anwesenheit von Eisenpulver gut mahlen, so daß diese Mischung zweckmäßigerweise durch einen Mahlvorgang in einer Schlagmühle hergestellt wird. Anstelle von Polyurethanschaum lassen sich auch Kunststoffschäume verwenden, die sich wegen ihrer Neigung zu elektrostatischer Aufladung schlecht handhaben lassen. Beim Mahlen von Styropor zusammen mit Eisenpulver tritt diese Aufladung nicht auf.

Für die Erfindung läßt sich Eisenpulver einsetzen, wie es aus der Pulvermetallurgie bekannt und zur Herstellung von Preßteilen verwendet wird. Es wird durch Verdüsen schmelzflüssigen Eisens hergestellt; erschmelzungsbedingte Legierungsbestandteile sind für die hier vorgeschlagene Verwendung unschädlich. Geringe Gehalte von Mangan sind nützlich.

## Patentansprüche

1. Reaktionsaktiver Füller für den Bau bitumengebundener Straßendecken und dergleichen, der aus einem Gemenge von 3 bis 70 Gewichts-% Eisenpulver und aus einer nichtmetallischen Komponente, welche im wesentlichen aus Steinmehl und/oder gemahlenem ausgehärtetem Kunststoff und/oder Kohlenstoff in Form von Kohle, Koks oder Ruß besteht, zusammengesetzt ist, wobei das Gemenge eine Korngröße unter 0,1 mm hat.

2. Reaktionsaktiver Füller nach Anspruch 2, dadurch gekennzeichnet, daß das Eisenpulver in der Kornklasse 0,001 bis 0,04 mm und die nichtmetallische Komponente in der Kornklasse 0 bis 0,09 mm liegt.

3. Reaktionsaktiver Füller nach Anspruch 1 oder 2, dadurch gekennzeichnet, daß der Anteil des Eisenpulvers 5 bis 35 Gewichts-% beträgt.

4. Reaktionsaktiver Füller nach Anspruch 3, dadurch gekennzeichnet, daß neben dem Eisenpulveranteil noch 2 bis 10 Gewicht-% Polyurethanschaummehl und 55 bis 93 Gewichts-% Lava- oder Kalksteinmehl enthalten sind.

## Revendications

1. Charge réactive pour la construction de revêtements routiers liés par du bitume et analogue, qui est composée d'un mélange de 3 à 70% en poids de poudre de fer et d'un composant non métallique, lequel est constitué principalement de chaux et/ou de matière synthétique durcie broyée et/ou de carbone sous forme de charbon, coke ou noir de carbone, le mélange ayant une grosseur de grains inférieure à 0,1 mm.

2. Charge réactive selon la revendication 1, caractérisée en ce que la poudre de fer se trouve dans l'intervalle granulométrique de 0,001 à 0,04 mm et le composant non métallique dans l'intervalle granulométrique de 0 à 0,09 mm.

3. Charge réactive selon la revendication 1 ou 2, caractérisée en ce que la proportion de poudre de fer s'élève de 5 à 35% en poids.

4. Charge réactive selon la revendication 3, caractérisée en ce que, en plus de la proportion de poudre de fer, encore 2 à 10% en poids de mousse de polyuréthane broyée et 55 à 93% en poids de poudre de calcaire ou de lave sont contenus.

## Claims

1. Reaction-active filler for the construction of bitumen-bound road surfaces and the like, which is comprised of a mixture of 3 to 70% by weight iron powder and of a non-metallic constituent which substantially consists of rock meal and/or ground hardened plastic and/or carbon in the form of coal, coke or soot, the mixture having a grain size of less than 0.1 mm.

2. Reaction-active filler according to Claim 1, characterised in that the iron powders is in the grain class 0.001 to 0.04 mm and the non-metallic constituent is in the grain class 0 to 0.09 mm.

3. Reaction-active filler according to Claim 1 or 2, characterised in that the proportion of the iron powder is 5 to 35% by weight.

4. Reaction-active filler according to Claim 3, characterised in that in addition to the iron powder content it also contains 2 to 10% by weight polyurethane foam meal and 55 to 93% by weight lava meal or limestone meal.